# EUROPÄISCHE PATENTANMELDUNG

(11) **EP 1 124 113 A2**
(43) Veröffentlichungstag der Anmeldung: **16.08.2001**
(21) Anmeldenummer: 01103051.7
(22) Anmeldetag: 09.02.2001
(51) Int. Cl.: G01D 11/28, G01D 13/22

(54) **Elektrolumineszenz-Folie zur Zeigerausleuchtung**

(30) Priorität: 10.02.2000 DE 10006058
(71) Anmelder: Borg Instruments AG, 75196 Remchingen (DE)
(72) Erfinder: Arheit, Thomas, 76356 Weingarten (DE)
(74) Vertreter: COHAUSZ HANNIG DAWIDOWICZ & PARTNER

(57) **Zusammenfassung**

Analoganzeigeinstrument, insbesondere für den Einsatz in Kraftfahrzeugen, mit einer Armaturentafel 1,21 und mit einem in Blickrichtung des Betrachters vor der Armaturentafel 1,21 angeordneten Zeiger 2,13, der eine wenigstens teilweise von einer Lichtquelle beleuchtbare Zeigerfahne 6 aufweist, wobei die Lichtquelle eine Elektroluminiszenz-Folie (EL-Folie) 7,19 ist

## Beschreibung

Die Erfindung betrifft ein Analoganzeigeinstrument, insbesondere für den Einsatz in Kraftfahrzeugen, mit einer Anzeigetafel und mit einem in Blickrichtung des Betrachters vor der Anzeigetafel angeordneten Zeiger, der eine wenigstens teilweise von einer Lichtquelle beleuchtbare Zeigerfahne aufweist.

Analoganzeigeinstrumente mit beleuchtbaren Zeigerfahnen sind hinlänglich bekannt. Die Beleuchtung der meist verschwenkbar gelagerten Zeigernadeln geschieht mittels Glühlampen oder Leuchtdioden, deren Licht über Lichtleiter zu der Zeigerfahne geleitet wird. Dabei ist es einerseits bekannt, die Zeiger der Analoganzeigeinstrumente in einem Durchlichtverfahren auszuleuchten, wobei die Zeigerfahne selber als strahlender Lichtleiter dient. Andererseits ist es bekannt, die Zeiger von außen zu beleuchten (Auflichtverfahren), so daß die Oberfläche der Zeigernadel das Licht zum Betrachter hin reflektiert und der Eindruck einer beleuchteten Zeigernadel entsteht.

Die bekannten Verfahren haben jedoch den Nachteil, daß die als Lichtquellen eingesetzten Leuchtdioden oder Glühlämpchen eine begrenzte Lebensdauer haben und von Zeit zu Zeit wegen eines Defektes ausgetauscht werden müssen. Ein solcher Austausch ist aufwendig und teuer. Weiterhin nachteilig an den bislang verwendeten Lichtquellen ist, daß sie zusammen mit ihrer Halterung und mit den Mitteln zur Kontaktierung einen relativ großen Einbauraum benötigen. Werden diese Lichtquellen direkt hinter der Anzeigetafel angebracht, bedingen sie eine vergleichsweise große Einbautiefe des Instrumentes und begrenzen die Optimierung der Bautiefe. Wenn die Lichtquellen an anderer Stelle plaziert werden, ist die Lichtführung zur Anzeigetafel entsprechend aufwendig und kostenintensiv, da entsprechend lange Lichtleiter verlegt werden müssen.

Aufgabe der vorliegenden Erfindung ist daher eine Möglichkeit zur Beleuchtung eines Analoganzeigeinstrumentes zu schaffen, die bei hoher Zuverlässigkeit und geringen Herstellungskosten eine gute Beleuchtung der Zeigerfahne bei geringem Raumbedarf gewährleistet.

Diese Aufgabe wird durch ein Analoganzeigeinstrument nach dem Kennzeichen des Anspruch 1 gelöst.

Der besondere Vorteil des erfindungsgemäßen Instrumentes ist, daß sich die verwendeten Elektrolumineszenz-Folien (EL-Folien) vielseitig einsetzen lassen So ist es möglich, mit den EL-Folien einerseits die Skalen, Symbole und Beschriftungen auf der die Oberfläche der Armaturentafel bildende Anzeigetafel und andererseits auch den Zeiger zu beleuchten. Da EL-Folien bekanntermaßen schon vielfach zur Beleuchtung der Informationsanzeigen auf Amaturentafeln eingesetzt werden, ist es konstruktiv einfach, diese schon vorhandenen EL-Folien zur Beleuchtung des Zeigers zu "mißbrauchen". Das erspart den Einsatz zusätzlicher Lichtquellen, wie Leuchtdioden oder Glühlampen, und ermöglicht den Verzicht auf kompliziert verlegte Lichtleiter. Durch die EL-Folien lassen sich die Herstellungskosten des Anzeigeinstrumentes somit stark reduzieren.

Ein weiterer Vorteil derartiger EL-Folien ist die gegenüber den bisher verwendeten Lichtquellen vergleichsweise große Zuverlässigkeit. Dabei ist die Leuchtstärke einer EL-Folie zur hellen Ausleuchtung des Zeigers völlig ausreichend. Zudem ist vorteilhaft, daß sich die EL-Folien in beliebigen Schnitten, beispielsweise als Streifen, Platten oder Ringen, einsetzen lassen. Damit ist eine individuelle Anpassung einer Folie an das spezielle Instrument möglich.

Als besonderer Vorteil der EL-Folien ist ihr geringer Bedarf an Bauraum zu sehen. Sie tragen mit ihrer geringen Stärke kaum zur Bautiefe des Instrumentes bei. Die elektrischen Anschlüsse einer Folie können dabei als Drähte beliebig verlegt und an eine Spannungsquelle angeschlossen werden. In einer besonderen Ausführungsform hat das Instrument eine hinter der für den Fahrer sichtbaren Anzeigetafel angeordnete Trägerplatte, auf die eine EL-Folie aufgebracht, insbesondere aufgeklebt, Vorteilhafterweise hat die Trägerplatte dieselben Abmessungen wie die Anzeigetafel und ist vollständig mit EL-Folie bedeckt. Trägerplatte und Anzeigetafel bilden dabei ein Sandwich, das die EL-Folie einschließt. In dieser Ausführung brauchen die Informationsanzeigen lediglich aus dem Material der Anzeigetafel herausgearbeitet werden. Gleichzeitig kann eine Öffnung zur Auskoppelung des zur Beleuchtung des Zeigers vorgesehenen Lichtes in die als Maske dienende Anzeigetafel eingebracht werden. Die Anzeigetafel ist vorteilhafterweise eine unduchsichtige, insbesondere eine schwarze, Folie, welche auf die EL-Folie aufgeklebt oder aufgedruckt ist. In besonderen Ausführungsformen kann auf die Ttägerplatte verzichtet werden.

Die EL-Folie läßt sich sowohl zur Beleuchtung des Zeigers im Durchlicht- als auch im Auflichtverfahren verwenden. Beim Einsatz des Durchlichtverfahrens ist die Zeigerfahne aus transparentem Kunststoff und das aus der EL-Folie ausgekoppelte Licht wird, insbesondere wie aus dem Stand der Technik bekannt, in den Fuß des Zeigers eingekoppelt und durch Reflexionsflächen in diesem verteilt, so daß eine homogene Durchleuchtung gewährleistet ist. Damit eine Reflexion des Lichtes zum Betrachter hin stattfindet, ist die Zeigerfahne beispielsweise eingetrübt oder an ihrer Unterseite mit homogen verteilten Reflexionsflächen versehen, die das Licht in Richtung des Betrachters aus der Deckfläche der Zeigerfahne auslenken. Beim Einsatz des Auflichtverfahrens wird die Deckfläche der Zeigerfahne von Außen beleuchtet und das Licht durch eine auf der Deckfläche befindliche Reflexionsfläche, die in einer besonderen Ausführungsform einen Winkel von etwa 45° zur Drehebene des Zeigers aufweist, zum Betrachter hin reflektiert.

Besondere Ausführungsformen des erfindungsgemäßen Analoganzeigeinstrumentes sind in den beiden Zeichnungen dargestellt und werden im Folgenden näher beschrieben. Es zeigen:
- **Figur 1**: eine in Durchlichtverfahren beleuchtete Zeigerfahne und
- **Figur 2**: eine in Auflichtverfahren beleuchtete Zeigerfahne.

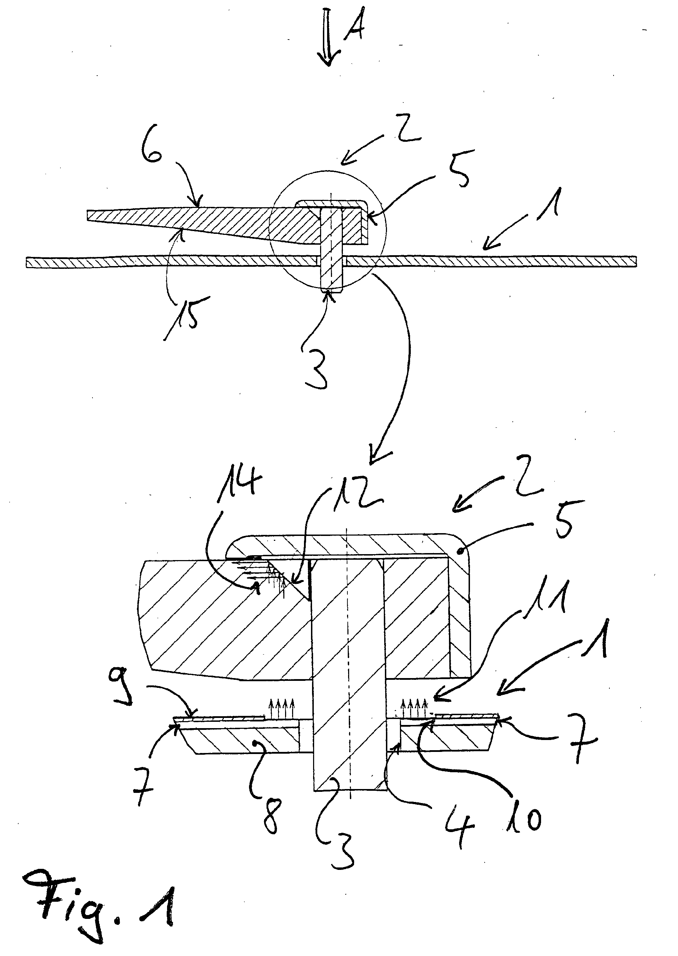

In Figur 1 ist von einem, insbesondere für den Einsatz in Kraftfahrzeugen vorgesehenen, Analoganzeigeinstrument mit einer in diesem Falle kreisrunden. Armaturentafel 1 und mit einem in Blickrichtung des Betrachters (Pfeil A) vor der Armaturentafel 1 angeordneten Zeiger 2. Der Zeiger 2 ist um eine Zeigerwelle 3 verschwenkbar, die durch eine Bohrung 4 in der Armaturentafel 1 hindurchgeführt ist. Der Kopf der Zeigerwelle 3 ist mit einer lichtundurchlässigen Abdeckung 5 bedeckt. In diesem Ausführungsbeispiel ist die Zeigerfahne 6 mittels einer als Lichtquelle dienenden Elektroluminiszenz-Folie 7 im Durchlichtverfahren beleuchtet, wie nachfolgend anhand des unten in Figur 1 abgebildeten Ausschnittes erklärt wird.

Im unteren Teil der Figur 1 ist zu erkennen, daß die Armaturentafel 1 mehrschichtig aufgebaut ist. So ist die EL-Folie 7 auf eine massive Trägerplatte 8 aus Kunststoff aufgebracht und mit einer als Folie ausgebildeten Anzeigetafel 9 abgedeckt, so daß kein Licht aus der EL-Folie ins Auge des Betrachters gelangen kann. Rund um den Durchbruch 4 der Zeigerwelle 3 ist aus der Anzeigetafel 9 eine kreisrunde Öffnung 10 in die Anzeigetafel 9 ausgeschnitten, so daß Licht 11 der EL-Folie austreten kann. Wie dargelegt, ist es vorteilhaft, die EL-Folie mit einer undurchsichtigen Folie zu bedrucken, die dann die Funktion der Anzeigetafel hat. Das Licht tritt parallel zur Zeigerwelle 3 in den Korpus des transparenten Zeigers 1 ein und wird an einer Reflexionsfläche 12, die in der Zeigerfahne angeordnet ist, in Richtung der Zeigerspitze reflektiert (Strahlen 14). Sowohl die Öffnung 10 als auch die Reflexionsfläche 12 sind von der Abdeckung 5 bedeckt, so daß das parallel zur Zeigerwelle strahlende Licht nicht zum Auge des Betrachters gelangen kann. Um eine gleichmäßige Ausleuchtung der Zeigerfahne 6 zu gewährleisten, ist die Unterkante 15 der Zeigerfahne 6 zur Spitze hin abgeschrägt und aufgerauht, so daß sie die parallel zur Zeigerfahne 6 verlaufenden Lichtstrahlen 14 zum Betrachter hin streut.

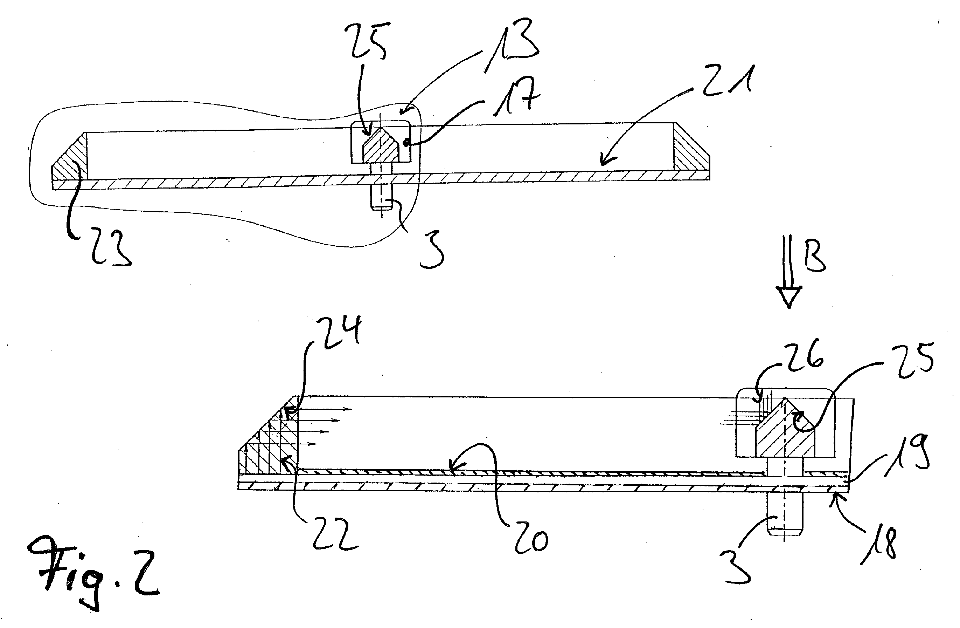

Das Ausführungsbeispiel nach Figur 2 zeigt einen im Auflichtverfahren beleuchteten Zeiger 13, der im Querschnitt gezeigt ist. Der Zeiger 13 ist auf einer Zeigerwelle 16 gelagert und im Bereich des Kopfes von einer Abdeckkappe 17 bedeckt. Der Zeiger 13 überstreicht wiederum eine Armaturentafel 21 mit teilkreisförmigen Anzeigebereich, wobei die Welle des Zeigers im Zentrum des Kreises angeordnet ist. Die Armaturentafel 21 weist eine auf einer Trägerplatte 18 aufgeklebte EL-Folie 19 auf, wobei die EL-Folie 19 großflächig von einer Anzeigetafel 20 bedeckt ist. In die Anzeigetafel 20 sind die Skalen, die Symbole und andere zu beleuchtende Beschriftungen ausgenommen.

Zur Auskoppelung von Licht 22 ist auf die EL-Folie 19 ein in diesem Falle entsprechend teilkreisförmiger Lichtleiter 23 auf den äußeren Radius aufgesetzt. Das ausgekoppelte Licht 22 wird an einer im Lichtleiter 23 angeordneten Reflexionsfläche 24 in Richtung des Zeigers 13 gelenkt. Die Reflexionsfläche 24 ist in diesem Falle eine unter einem Winkel von 45° geneigte äußere Seitenfläche des mit seiner Grundfläche auf die EL-Folie aufgesetztn ringförmigen Lichtleiters. Die Zeigerfahne weist ihrerseits eine zumindest teilweise eine dem Betrachter zugewandte reflektierende Deckfläche 25 auf, die von dem Licht 22 beleuchtet wird und die Lichtstrahlen 26 zum Betrachter hin reflektiert, so daß die Zeigerfahne für den Betrachter homogen erleuchtet scheint. Die Deckfläche ist etwa im Winkel von 45° zur Blickrichtung des Betrachters (Pfeil B) geneigt In diesem Ausführungsbeispiel hat der Zeiger 13 entlang der Zeigerfahne zwei im Winkel von 90° zueinander spitzgiebelig angeordnete reflektierende Deckflächen 25. Der Zeiger wird in diesem Ausführungsbeispiel in der Ebene der Deckflächen 25 von dem durch den Lichtleiter 23 parallel zur Anzeigetafel 20 reflektierten Licht beleuchtet.

## Patentansprüche

1. Analoganzeigeinstrument, insbesondere für den Einsatz in Kraftfahrzeugen, mit einer Armaturentafel (1,21) und mit einem in Blickrichtung des Betrachters vor der Armaturentafel (1,21) angeordneten Zeiger (2,13), der eine wenigstens teilweise von einer Lichtquelle beleuchtbare Zeigerfahne (6) aufweist,
**dadurch gekennzeichnet**, daß die Lichtquelle eine Elektroluminiszenz-Folie (EL-Folie) (7,19) ist.

2. Instrument nach Anspruch 1,
**dadurch gekennzeichnet**, daß die EL-Folie (7,19) hinter einer Anzeigetafel (9,20) angeordnet ist, welche die zum Betrachter gewandte Oberfläche der Armaturentafel (1,21) bildet und auf der beleuchtbare Informationsanzeigen angeordnet sind.

3. Instrument nach Anspruch 1,
**dadurch gekennzeichnet,** daß die EL-Folie (7,19) mit einer undurchsichtigen Folie bedruckt ist, aus der die Informationsanzeigen ausgenommen sind.

4. Instrument nach einem der vorherigen Ansprüche,
**dadurch gekennzeichnet**, daß die EL-Folie (7,19) auf eine Trägerplatte (8,18) aufgebracht, insbesondere aufgeklebt, ist.

5. Instrument nach einem der vorherigen Ansprüche,
**dadurch gekennzeichnet**, daß die Anzeigetafel (9,20) die mit EL-Folie (7,19) versehene Trägerplatte (8,18) bedeckt und von unbedeckten Stellen (10) der EL-Folie (7,19) Licht zur Beleuchtung des Zeigers (2,13) ausgekoppelbar ist.

6. Instrument nach einem der vorherigen Ansprüche,
**gekennzeichnet durch** einen kreisförmigen oder teilkreisförmigen Anzeigebereich und einen verschwenkbaren Zeiger (2,13), wobei die Welle (3) des Zeigers im Zentrum des Kreises angeordnet ist.

7. Instrument nach einem der vorherigen Ansprüche,
**dadurch gekennzeichnet**, daß die Zeigerfahne aus transparentem Kunststoff ist.

8. Instrument nach einem der vorherigen Ansprüche,
**dadurch gekennzeichnet**, daß das aus der EL-Folie (7,19) ausgekoppelte Licht (11,22) in den Zeiger einkoppelbar ist.

9. Instrument nach Anspruch 8,
**dadurch gekennzeichnet**, daß das Licht (11) in den Fuß des Zeigers parallel zur Welle (3) einkoppelbar und mittels einer im Zeiger angeordneten Reflektionsfläche (12) in Richtung der Zeigerfahne (6) umlenkbar ist.

10. Instrument nach Anspruch 9,
**dadurch gekennzeichnet**, daß in die Zeigerfahne (6) Reflexionsmittel (15) eingebracht sind, welche das Licht (14) aus der Zeigerfahne (6) zum Betrachter hin reflektieren, so daß die Zeigerfahne (6) für den Betrachter homogen ausgeleuchtet scheint.

11. Zeigerinstrument nach einem der vorigen Ansprüche,
**dadurch gekennzeichnet**, daß die Zeigerfahne zumindest teilweise eine dem Betrachter zugewandte reflektierende Deckfläche (25) aufweist, die von dem Licht (22) der EL-Folie (19) beleuchtbar ist, so daß die Zeigerfahne für den Betrachter homogen erleuchtet scheint.

12. Zeigerinstrument nach Anspruch 11,
**dadurch gekennzeichnet**, daß die Deckfläche eine im Winkel von 45° zur Drehebene des Zeigers angeordnete Reflexionsfläche aufweist.

13. Zeigerinstrument nach einem der Ansprüche 11 oder 12,
**dadurch gekennzeichnet**, daß zur Auskoppelung von Licht ein Lichtleiter (23) auf die EL-Folie (19) aufgesetzt ist, mit dem die Deckfläche (25) beleuchtbar ist.

14. Zeigerinstrument nach einem der vorherigen Ansprüche,
**dadurch gekennzeichnet**, daß der Lichtleiter (23) ein zur Welle (3) des Zeigers (13) konzentrisch angeordneter Ring aus Plexiglas ist, der mit einer planen Grundfläche auf die EL-Folie (19) aufgesetzt ist und der eine unter einem Winkel von 45° geneigte äußere Seitenfläche (24) aufweist, mittels der das Licht (22) zur Deckfläche (25) der Zeigerfahne reflektierbar ist.
